(19) Europäisches Patentamt
European Patent Office
Office européen des brevets

(11) **EP 3 879 262 A1**

(12) **EUROPEAN PATENT APPLICATION**

(43) Date of publication:
**15.09.2021 Bulletin 2021/37**

(51) Int Cl.:
**G01N 27/622** (2021.01)   **H01J 49/00** (2006.01)

(21) Application number: **21161725.3**

(22) Date of filing: **10.03.2021**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **10.03.2020   US 202062987775 P**

(71) Applicant: **Thermo Finnigan LLC**
**San Jose, CA 95134 (US)**

(72) Inventors:
• **POLTASH, Michael L.**
  **Fremont, CA 94539 (US)**
• **SILVEIRA, Joshua A.**
  **San Jose, CA 95134 (US)**

(74) Representative: **Boult Wade Tennant LLP**
**Salisbury Square House**
**8 Salisbury Square**
**London EC4Y 8AP (GB)**

(54) **MULTI-GATE MULTI-FREQUENCY FILTER FOR ION MOBILITY ISOLATION**

(57)   An ion mobility separation apparatus comprises: a compartment having a gas therein; an electrode structure comprising a first plurality of electrodes within the compartment, the electrode structure defining a longitudinal axis; one or more power supplies electrically coupled to the electrodes, wherein the plurality of electrodes and the power supply are configured to maintain an electrical pseudopotential well encompassing and disposed parallel to the longitudinal axis and to maintain an electric field directed parallel to the longitudinal axis; an entrance ion gate disposed at a first end of the longitudinal axis; an exit ion gate disposed at a second end of the longitudinal axis; and at least one additional ion gate disposed between the entrance and exit ion gates.

FIG. 5A

EP 3 879 262 A1

**Description**

**FIELD OF THE INVENTION**

The present invention relates to methods for the analysis of samples by ion mobility spectrometry and by ion mobility spectrometry combined with mass spectrometry.

**BACKGROUND OF THE INVENTION**

Ion mobility is widely applied to the detection of chemical warfare agents, explosives, and illicit drugs. It has also been extensively used in the detection of food contaminants, pharmaceutics, environmental contaminants, and endogenous physiological compounds. Known ion mobility spectrometers include an ionization source that generates ions from analyte molecules and a so-called "drift tube" within which the generated ions are caused to drift through a space under the influence of a constant applied electric field. In operation, ions are propelled along the ion guide by the applied field and may be separated according to their relative mobility.

An ion mobility spectrometer may be operated on its own as a means for ion separation or it may be used in combination with other ion separation devices in so-called hybrid IMS instruments. Examples of hybrid IMS instruments include those based on liquid chromatography IMS (LC-IMS), gas chromatography IMS (GC-IMS) and IMS mass spectrometry (IMS-MS). The latter type of instrument is a powerful analytical tool which employs mass spectrometry for further separating and/or identifying peaks in an ion mobility spectrum. More than two separation techniques may be combined, e.g., LC-IMS-MS.

Various constructions of drift tube have been proposed. The drift tube may, for example, comprise a series of ring electrodes axially spaced apart along the length of the spectrometer, wherein a constant potential difference is maintained between adjacent ring electrodes such that a constant electric field is produced in the axial direction. A pulse of ions is introduced into the drift tube, which contains a buffer gas, and as the ions travel through the tube under the influence of the constant electric field they attain a constant drift velocity and separate in the axial direction according to their ion mobility. The buffer gas is often arranged flowing in the opposite direction to the direction of ion travel.

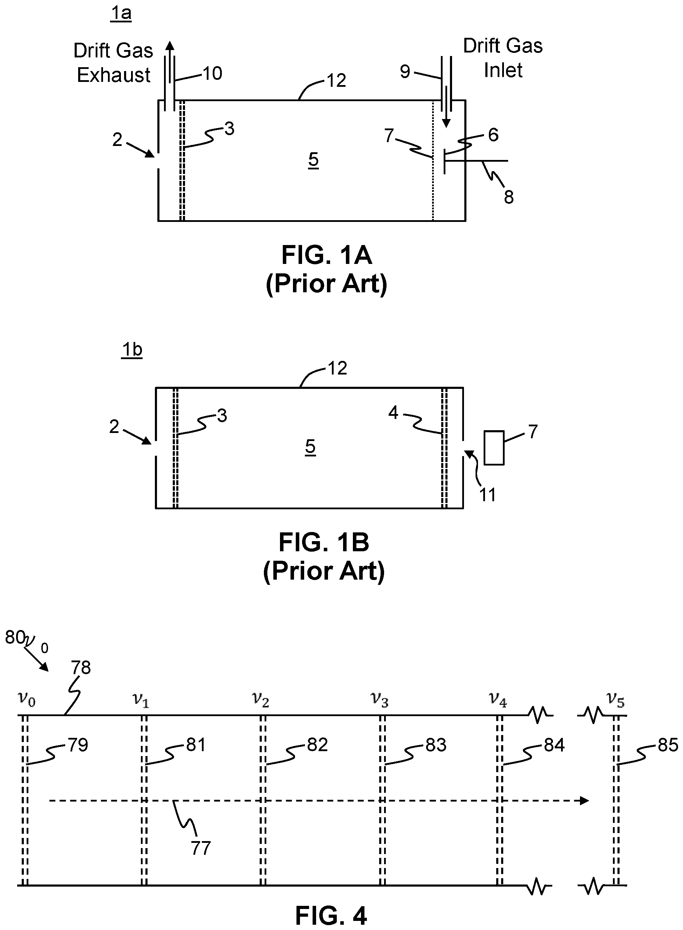

FIGS. 1A-1B are schematic diagrams of conventional stand-alone ion mobility spectrometer apparatuses (see Tarver III, Edward E. External Second Gate-Fourier Transform Ion Mobility Spectrometry. No. SAND2004-4952. Sandia National Laboratories, 2005). An ion drift region **5** of each of the apparatuses **1a** and **1b** is generally enclosed within a so-called "drift tube" **12** which need not be specifically tubular in form. The drift region **5** contains an unionized gas that is maintained at a controlled pressure. Ions provided from an ion source are delivered into each apparatus through an entrance aperture and are urged in the general direction of a detector **7** by an applied electric field within the drift region **5**. In some instances, a flow of gas (comprising neutral molecules) whose direction is counter to the movement of the ions may be provided by a drift gas inlet port **9**. The gas flow is outlet through a gas exhaust port **10** that is disposed at the opposite end of the drift tube relative to the gas inlet **9**.

The drift velocity, $V_d$, through the drift region **5** of an ion mobility spectrometer is generally proportional to the applied electric field, with the proportionality constant, K, being variable from one ion species to another. Because of this variability, simultaneously introduced ions begin to separate from one another while migrating through the drift region **5** after passing through an ion gate **3**. The ion gate **3** is operated so that batches of ions are periodically introduced into the drift region as separate pulses. In the apparatus **1a** depicted in FIG. 1A, a detector **6,** for example a Faraday plate, measures the ion current versus the ions' arrival times at the detector after each gate pulse. Tarver (cited above) explains that, with a typical 20-30 millisecond analytical cycle time and a typical 0.2 millisecond pulse width, more than 99 percent of the ions are discarded and never reach the detector. Therefore, signal averaging over many scans is generally employed in order to achieve acceptable signal-to noise ratios.

FIG. 1B schematically illustrates a Fourier Transform Ion Mobility Spectrometer (FT-IMS) apparatus **1b**. The apparatus **1b** depicted in FIG. 1B comprises an additional gate **4,** here termed an exit gate, that is not present in the apparatus **1a**. The opening and closing cycles of the ion gates **3, 4** are periodic and synchronized to one another. After passing through the exit gate **4,** ions may exit from the drift region **5** through an exit aperture **11,** after which they are detected by detector **11**. Tarver explains that, in operation of a Fourier Transform ion mobility spectrometer, an interferogram is generated...

"as the ions pulsed into the spectrometer by the entrance gate interact with the second simultaneously pulsed 'exit gate'. The ions reach the second gate after the time-of-flight delay for ion transit through the separation region. An interference signal is produced that rises and falls depending on the degree to which the second gate is opened or is closing as the ions arrive. For an ion to have maximum contribution to the signal it must be traveling at a constant velocity just matching the gate opening frequency of the second gate as it is swept. Minimal signal contribution is made if the ion reaches the gate as it closes. For a mixed sample containing a broad range of ion velocities there must be a broad range of gate opening frequencies to record the signal for each of the ion velocities. This is accomplished by pulsing open the gates with a square wave at continually increasing frequency from a few Hertz up to tens of kilo-Hertz over the analytical cycle.... All of the velocity information about each of the ions sampled is encoded in the interference signal (the interferogram). The mathematical relationship between the ion's velocity and the gate frequency allows for the Fourier transformation of the frequency interferogram and the recovery of the time domain ion mobility spectrum."

Through the action of Fellgett's advantage, the dual-gate FT-IMS technique described above provides a significant improvement in signal-to-noise characteristics of ion mobility spectra, relative to earlier techniques using apparatuses similar to the depiction in FIG. 1A. However, ion mobility drift tubes are also often employed in hybrid analysis techniques, in which the drift tube is not used for the purpose of measuring mobility spectra but is employed, instead, to separate individual ion species, one from another. In such hybrid analysis techniques, the so-separated ion species are then transferred to a different analytical apparatus, such as a mass analyzer or a mass spectrometer comprising a mass analyzer, for further processing and analysis. Because the role of the ion mobility drift tube, in such hybrid apparatuses, is to at least partially purify various ion species, the multiplex advantage afforded by Fourier Transform processing is not applicable.

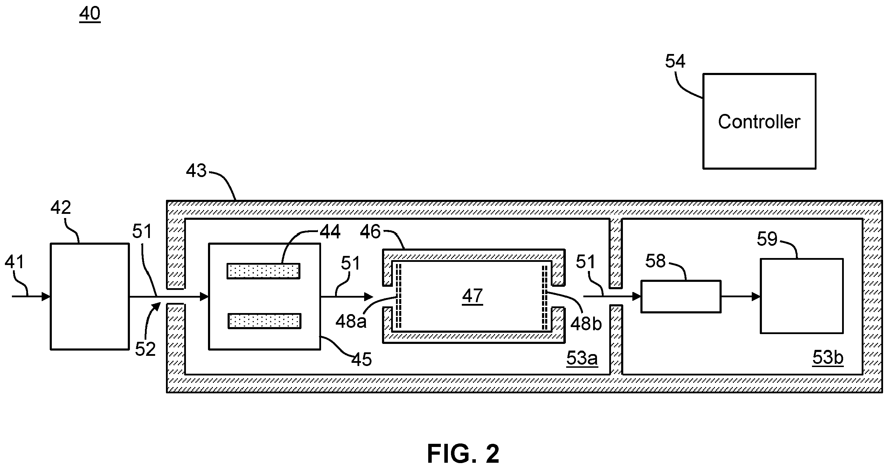

FIG. 2 is a schematic depiction of an exemplary hybrid ion mobility spectrometry-mass spectrometry (IMS-MS) system **40**. The IMS-MS system **40** includes an ion source **42** that receives a flux of sample material from a sample supply source **41** such as, for example, a gas chromatograph (GC) or a liquid chromatograph (LC). The general pathway of ions derived from the sample within the system **40** is indicated by arrows **51**. Ions generated at the ion source **42** are delivered into one or more evacuated interior regions **53a, 53b** of an evacuated chamber **43** through an ion inlet **52**. In the example shown, the evacuated chambers are differentially pumped, with the gas pressure in the downstream chamber **53b** being lower than the pressure in the upstream chamber **53a**. The ions are received into an ion mobility drift tube **46** comprising an internal ion separation region **47** through an entrance gate **48a** that is operated so as to periodically introduce pulses of ions into the drift region. The periodic opening and closing of an exit gate **48b** is operated in synchronicity with the opening and closing of the entrance gate so as to only permit selected ion species (i.e., having a certain drift velocity) of each pulse to be transferred into the high vacuum chamber **53b**. The high vacuum chamber **53b** includes one or more ion processing apparatuses **58** and a mass analyzer **59**. The ion processing components may include one or more of a mass filter, an ion trap for temporary storage of various portions of ions received from the ion mobility drift tube **46** and an ion fragmentation or reaction cell.

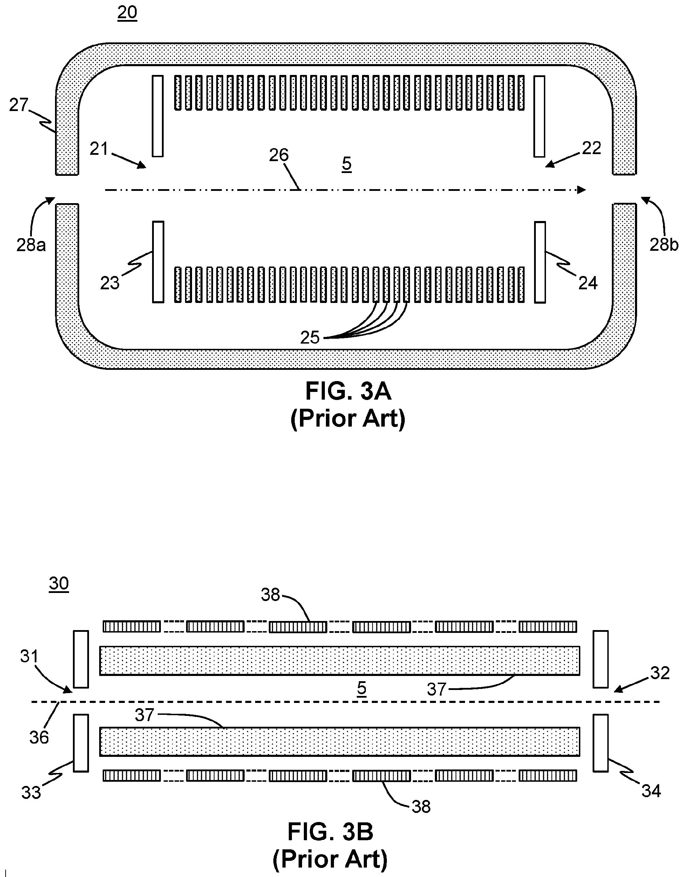

Ions are propelled through the ion separation region **47** of the ion mobility drift tube **46** by an axial field that may be applied in accordance with either FIG. 3A or FIG. 3B. The IMS-MS system **40** also includes a vacuum system (not shown) for maintaining the various interior regions of the chamber **43** at controlled, sub-atmospheric pressure levels. One or more system controllers **54,** which may comprise any combination of software, electronics hardware and firmware, comprise computer-readable logical instructions for controlling various components of the IMS-MS system **40,** including components not specifically illustrated in FIG. 2. An optional multipole ion trap or mass filter **45** may be disposed and coupled between the ion source **42** and the drift tube **46.** For example, the ion trap or mass filter may comprise a multipole apparatus comprising a plurality of rod electrodes **44.**

Hybrid analysis systems having front-end ion-drift tubes, such as the system **40** depicted in FIG. 2 have the disadvantge of low duty-cycle. Overcoming this limitation of low ion utilization has been addressed by the addition of two supplemental ion processing techniques: ion trapping and ion multiplexing, or some combination thereof. In general, such supplemental processing techniques make use of the quadrupole component **45** illustrated in FIG. 2. This component may comprise an ion trap, a mass filter or both. By using this component or set of components, it is possible to increase the ion number of ions admitted into the ion separation region **47** during each opening of the entrance gate **48a**.

Although the use of the supplemental ion processing techniques described above offer improved ion utilization for specific applications that do not necessarily require subsequent ion processing or analysis, there nonetheless still exists a void in high efficiency, multiplexed approaches for drift time selection or isolation in hybrid systems that utilize an additional analyzer apparatus that is disposed downstream from the that receives ions from an ion mobility analyzer. Such an operational mode would be useful for either full scan or tandem mass spectrometry experiments in IMS-MS systems. As noted above, dual-gate multiplexing aims to acquire data in a manner that produces a full IMS spectrum. As such, these techniques cannot be used to provide high ion utilization for drift time selection and subsequent mass analysis of the selected ion species. Accordingly, there is a need in the art for apparatuses and methods that more efficiently utilize ion mobility separation in hybrid systems that comprise another analyzer apparatus downstream from an ion mobility analyzer.

## SUMMARY

The teachings herein disclose operational modes for ion mobility spectrometers and ion mobility separation apparatuses (IMS apparatuses) that enable drift-time-based ion species isolation with high transmission efficiency while filtering out ions corresponding to all other drift times. Such ion species isolation allows for additional gas-phase characterization, processing and/or analysis of ion-mobility-selected ion species downstream from the IMS analyzer. Isolation is performed using multiple ion gates placed throughout the drift tube equidistant from one another. In general, a total of $N$ ion gates are disposed within the drift tube at respective longitudinal positions $0, x_1, \ldots, x_j, \ldots, x_N$ ($0 < x \leq L$) where $L$ is the total length of the drift region between the entrance gate (Gate #0 at position $x = 0$) and the exit gate (Gate #N).

Multiple gates throughout the length of a drift tube aid in the minimization of drift time overlap among different ion species having similar ion mobility constants, thereby improving the isolation of targeted species. This mode of operation provides a duty cycle that exceeds the current modes of operation for dual-gate IMS isolation which rely on a conventional "pulse-and-wait" mode. Ion trapping and/or filtering upstream of the novel drift tube may also be implemented to still further improve duty cycle. Moreover, according to a "BoxCar"-type acquisition mode, the waveforms applied to the gates can be composite waveforms comprised of a plurality of component square-wave pulse trains, each $k^{th}$ component square-wave pulse train of the composite waveform comprising a respective base frequency, $v_N(k)$. In this way, the transmission of ion species through the drift tube is multiplexed; in other words, ion species comprising multiple restricted mobility ranges are simultaneously preferentially transmitted through the drift tube. According to this mode of operation, selected portions of the initial ion beam, each portion comprising a separate respective ion mobility range, are mass analyzed together in a mass analyzer that is downstream from an ion mobility separation apparatus. In some instances, the result of such mass analysis is a partial mass spectrum. In such instances, after analysis of each portion, the frequencies of the component waveforms can be stepped (incremented or decremented), to permit simultaneous transmission of ion species comprising a different set of mobility ranges through the IMS separation apparatus. A full IMS spectrum or mass spectrum having improved signal to noise characteristics may then be reconstructed from the separate partial spectra.

In accordance with a first aspect of the present teachings, an ion mobility separation apparatus comprises: (a) a compartment having a gas therein; (b) an electrode structure comprising a first plurality of electrodes within the compartment, the electrode structure defining a longitudinal axis; (c) one or more power supplies electrically coupled to the electrodes, wherein the plurality of electrodes and the power supply are configured to maintain an electrical pseudopotential well encompassing and disposed parallel to the longitudinal axis and to maintain an electric field directed parallel to the longitudinal axis; (d) an entrance ion gate disposed at an ion entrance end of the longitudinal axis; (e) an exit ion gate disposed at an ion exit end of the longitudinal axis; and (f) at least one additional ion gate disposed between the entrance and exit ion gates, wherein each of the entrance ion gate the exit ion gate and the at least one additional ion gate comprises a closed configuration during which ions are prevented from passing through the ion gate and an open configuration during which ions are able to pass through the ion gate.

The one or more power supplies may be configured to supply a respective voltage waveform to each gate such that the ion gates are periodically in their respective open configurations according to a pattern such that ion species having a particular range of ion mobility or particular ranges of ion mobility are transferred through the entrance gate, exit gate and the at least one additional gate in preference to ion species not having the particular range or particular ranges of ion mobility. In such instances, the at least one additional ion gate may comprise a plurality of $N - 1$ total ion gates, where $N > 2$, that are evenly spaced between the entrance and exit ion gates. The voltage waveform supplied to the entrance ion gate may be such that the entrance gate is periodically in its open configuration with a frequency of $v_0$. In such instances, the voltage waveform supplied to each other ion gate that is $i$ gates removed from the entrance ion gate, where $1 \leq i \leq N$, may be such that said each other ion gate is in its respective open configuration with a frequency, $v_i$, where $v_i = (i + 1)v_0$.

In accordance with a second aspect of the present teachings, a system comprises: (1) a mass spectrometer; and (2) an ion mobility separation apparatus that is configured to deliver ions to the mass spectrometer, the ion mobility separation apparatus comprising: (a) a compartment having a gas therein; (b) an electrode structure comprising a first plurality of electrodes within the compartment, the electrode structure defining a longitudinal axis; (c) one or more power supplies electrically coupled to the electrodes, wherein the plurality of electrodes and the power supply are configured to maintain an electrical pseudopotential well encompassing and disposed parallel to the longitudinal axis and to maintain an electric field directed parallel to the longitudinal axis; (d) an entrance ion gate disposed at an ion entrance end of the longitudinal axis; (e) an exit ion gate disposed at an ion exit end of the longitudinal axis; and (f) at least one additional ion gate disposed between the entrance and exit ion gates, wherein each of the entrance ion gate the exit ion gate and the at least one additional ion gate comprises a closed configuration during which ions are prevented from passing through the ion gate and an open configuration during which ions are able to pass through the ion gate.

**BRIEF DESCRIPTION OF THE DRAWINGS**

The above noted and various other aspects of the present invention will become apparent from the following description which is given by way of example only and with reference to the accompanying drawings, not necessarily drawn to scale, in which:

FIG. 1A is a schematic diagram of a conventional stand-alone ion mobility spectrometer apparatus;

FIG. 1B is a schematic diagram of a Fourier Transform Ion Mobility Spectrometer (FT-IMS) apparatus.

FIG. 2 is is a schematic depiction of an exemplary hybrid ion mobility spectrometry-mass spectrometry (IMS-MS) system upon which methods in accordance with the present invention may be practiced;

FIG. 3A is a schematic depiction of a known ion mobility spectrometer apparatus in which an axial field is applied by a set of closely-spaced ring electrodes;

FIG. 3B is a schematic depiction of another known ion mobility spectrometer apparatus in which ions are maintained within a drift region volume by a set of elongate multipole rod electrodes and in which an axial field is provided by means of axially separated auxiliary electrodes;

FIG. 4 is a schematic illustration of an ion mobility separation apparatus in accordance with the present teachings;

FIG. 5A is a schematic graphical depiction of the opening and closing cycles of the gates in drift tube of a four-gate ion mobility separation apparatus in accordance with a first method in accordance with the present teachings;

FIG. 5B is a schematic graphical depiction of the opening and closing cycles of the gates in drift tube of a four-gate ion mobility separation apparatus in accordance with a second method in accordance with the present teachings; and

FIG. 6 is a schematic graphical depiction of choosing of gate pulse frequencies to be multiplexed in accordance with the second method in accordance with the present teachings.

## DETAILED DESCRIPTION

The following description is presented to enable any person skilled in the art to make and use the invention, and is provided in the context of a particular application and its requirements. Various modifications to the described embodiments will be readily apparent to those skilled in the art and the generic principles herein may be applied to other embodiments. Thus, the present invention is not intended to be limited to the embodiments and examples shown but is to be accorded the widest possible scope in accordance with the features and principles shown and described. To fully appreciate the features of the present invention in greater detail, please refer to FIGS. 1A, 1B, 3, 3A, 3B, 4, 5A, 5B and 6 in conjunction with the following description.

In the description of the invention herein, it is understood that a word appearing in the singular encompasses its plural counterpart, and a word appearing in the plural encompasses its singular counterpart, unless implicitly or explicitly understood or stated otherwise. Furthermore, it is understood that, for any given component or embodiment described herein, any of the possible candidates or alternatives listed for that component may generally be used individually or in combination with one another, unless implicitly or explicitly understood or stated otherwise. Moreover, it is to be appreciated that the figures, as shown herein, are not necessarily drawn to scale, wherein some of the elements may be drawn merely for clarity of the invention. Also, reference numerals may be repeated among the various figures to show corresponding or analogous elements. Additionally, it will be understood that any list of such candidates or alternatives is merely illustrative, not limiting, unless implicitly or explicitly understood or stated otherwise.

FIG. 3A is a schematic depiction of a known ion mobility spectrometer apparatus 20 in which an axial field is applied by a set of closely-spaced ring electrodes 25. Each ring electrode is formed as a plate that has a central aperture. The collection of all the central apertures, all of which are aligned along axis 26, defines a drift region volume 5. The electrodes are electrically isolated from each other and radio-frequency (RF) voltages are applied to the electrodes in a prescribed phase relationship to radially confine the ions to the interior of the device. An entrance ion gate 23 comprises an entrance aperture 21 through which ions derived from an ion source are admitted into the drift region volume 5. An exit ion gate 24 has an exit aperture 22 through which a portion of the ions are permitted to exit from the ion mobility spectrometer apparatus 20. As described above, electric pulses are simultaneously provided to both ion gates 23, 24 to cause the operation of each gate to alternate between successive "open" and "closed" modes. Only those ions whose drift times, $t_d$, closely match the period of oscillation of the gate mode variation will exit through the exit aperture to be subsequently processed or analyzed by a downstream apparatus, such as a mass spectrometer. Optionally, the apparatus 20 may include an enclosure 27 having a hollow interior volume within which a desired gas pressure is maintained. The enclosure 27 has apertures 28a, 28b which permit the ions to pass in and out of the enclosure. Additional apertures (not shown) may be provided for the purposes of inletting gas into and exhausting gas from the enclosure.

FIG. 3B is a schematic depiction of another known ion mobility spectrometer apparatus 30 in which ions are maintained within a drift region volume 5 by a set of elongate multipole rod electrodes 37. The apparatus 30 generally comprises an even number of such rods with the total number of rods being greater than or equal to four. The various rod electrodes **37** are parallel to a central longitudinal axis **36** of the apparatus **30.** In well known fashion, confining radio-frequency (RF) oscillatory voltages are applied to the rod electrodes in order to confine ions to the vicinity of the central longitudinal axis **36.** The rod electrodes may also be provided with an applied mass-resolving DC voltage, for example to enable it to filter out some unwanted ions in accordance with their mass-to-charge ratios. The apparatus **30** is provided in use with a switchable axial electric field to drive the ions in the axial direction, which in the example shown in the drawing is provided by means of axially separated auxiliary electrodes **38** that are located adjacent and radially outwards of the multipole rods **37.** The electrodes **38** are preferably electrically inter-connected via resistive voltage dividers (not shown) in order to provide a desired potential gradient that creates the axial field. In other embodiments the axial electric field may be provided by other known means, such as by auxiliary electrodes disposed between adjacent rod electrodes. An entrance ion gate **33** comprises an entrance aperture **31** through which ions derived from an ion source are admitted into the drift region volume **5.** An exit ion gate **34** has an exit aperture **32** through which a portion of the ions are permitted to exit from the ion mobility spectrometer apparatus **30.** The opening and closing of the gates **33, 34** may be periodic and synchronized as described above.

FIG. 4 is a schematic illustration of an ion mobility separation apparatus **80** in accordance with the present teachings. The apparatus comprises a drift tube **78** which is illustrated in highly simplified form. In practice the drift tube may comprise components as illustrated either in FIG. 3A or FIG.3B. In similarity to conventional ion mobility spectrometer of separation apparatuses, the apparatus **80** comprises electrode components that create an axial electric field within the drift tube that is generally parallel to axis **77** and in the general direction of the arrow depicted on that axis.

In contrast to other ion mobility spectrometer of separation apparatuses, the apparatus **80** comprises more than two ion gates. In general, the apparatus comprises a total of N + 1 ion gates (*N* an integer, greater than or equal to 2), with the entrance gate **79** being herein referred to as "Gate #0" and the exit gate **85** being herein referred to as "Gate #N" (in which the letter "N" may be replaced by the value of the integer *N*, if known). The additional gates between the entrance and exit gates may be denoted as: "Gate #1", ... , "Gate #i" , ..., "Gate #N". For example, in addition to showing the entrance gate **79** and the exit gate **85**, FIG. 4 depicts an additional four ion gates: "Gate #1" **81,** "Gate #2" **82,** "Gate #3" **83** and "Gate #4" **84.** The number of additional ion gates disposed between the entrance and exit gates may be either fewer or greater than the number of ion gates depicted in FIG. 4 but, in any event, at least one such additional ion gate is present. Preferably, the additional ion gates are evenly spaced between the entrance and exit gates, as shown in FIG. 4. However, in alternative embodiments, the ion gates may be spaced unevenly.

Each ion gate of the ion mobility separation apparatus **80** may be in one of two operational states which may be switched between one another in response to an electrical signal provided the ion gate. In its "open" state, each ion gate permits ions to pass from one side of the ion gate to the other side of the ion gate which, in practice, is generally in the direction of the arrow depicted on axis **77.** In its "closed" state, each ion gate either neutralizes or deflects the path of ions that approach the gate, thereby preventing those ions from migrating along the entire length of the drift tube **78.** In operation of the apparatus **80,** the electrical signals provided to the gates are such that each gate continuously oscillates between its two operational states at a respective certain controlled frequency. For example, in FIG. 4, these frequencies are indicated as frequencies $v_0$, $v_1$, $v_2$, $v_3$, $v_4$, and $v_N$ which pertain to the operation of Gate #0, Gate #1, Gate #2, Gate #3, Gate #4 and Gate #N, respectively. More generally, for the evenly spaced configuration of *N* + 1 ion gates described above, the frequencies may be denoted as $v_0$, ..., $v_i$, ... , $v_N$. Each time that a gate is in its "open" state, it allows a pulse of ions to proceed in the direction of the arrow depicted on axis **77.** However, each time that a gate is in its "closed" state, ions that encounter that gate are eliminated. Preferably, the ion gates are constructed in the well-known form of Bradbury-Nielsen gates for which the controlling electrical signal is simply an alternating current (AC) voltage waveform of a selected or controlled frequency. The waveform may be tailored so that the transmission through each gate versus time approximates a square wave

In operation, the apparatus **80** receives, at its entrance gate **79,** a stream of ions comprising a plurality of ion species having a range of ion mobility values. The entrance gate (Gate #0) periodically admits a batch of the ions into the drift tube **78** of the apparatus, which is the ion separation region. The drift region contains a gas of neutral molecules that is maintained at a controlled pressure. Interactions between the gas and the admitted ions, the latter of which are urged to migrate through the drift tube by an axial field, cause the ions to move at different respective velocities through the drift region. As a result, each admitted batch of ions tends to spatially spread parallel as it migrates through the drift tube, with faster-moving ion species being further removed from the entrance gate. Thus, the different ion species encounter each gate other than Gate #0 at slightly different times. Ions will either pass through each gate or be eliminated from the ion batch at that gate depending on whether the gate is in its open or closed state at the time that the ions encounter the gate.

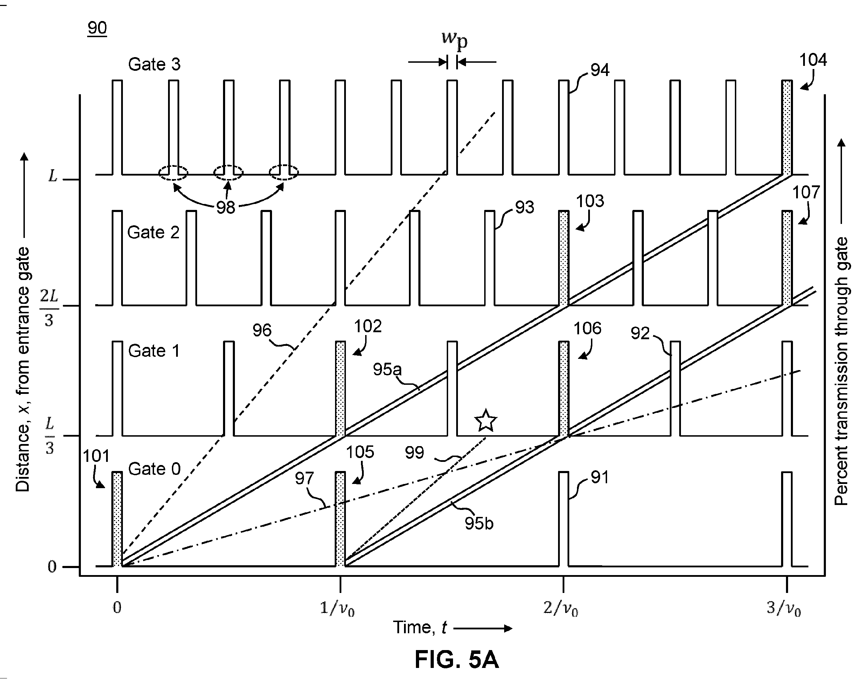

FIG. 5A is a schematic graphical depiction of the opening and closing cycles of the gates in drift tube of a four-gate ion mobility separation apparatus (i.e., N = 3) that is constructed and operated in accordance with the present teachings. The schematic plotted traces **91, 92, 93** and **94** represent the timing of the open and closed states of Gate #0, Gate #1, Gate #2 and Gate #3, respectively and are herein referred to as gate operational profiles. The idealized plotted traces **91, 92, 93** and **94** are square-wave plots that were generated under the assumption that each gate can only be in one of the two states at any given time and that the transition from one state to the other is essentially instantaneous. The closed state of each gate, in which that it is assumed that there is no transmission of ions, is represented by the flat baseline of each such plotted trace. The open state of each gate, in which it is assumed to that the one-hundred percent of ions are transmitted is represented by the top of each rectangular peak in the plots. Each such peak, during which the respective gate is open, is herein referred to as a "gate pulse". The gate pulses repeat with different frequencies, as explained further below. The height of each peak, which is referenced to the rightmost vertical axis of FIG. 5A, represents one-hundred percent transmission. The gate operations are plotted against the variable time, t, on the abscissa. The origin of the time axis, where $t = 0$, is at the initial opening of the entrance gate, Gate #0. For simplicity, all of the gate pulses are assumed to have the same pulse width, $w_p$ ; however, in actual operation, the pulse widths are unlikely to be identical for all of the gates.

The present inventors have recognized that the operation of the various gates may be coordinated such that ions having a particular restricted range of ion mobility values may progress completely through the drift tube and out through the exit gate **85,** while other ions having ion mobility values outside of the restricted range are prevented from passing completely through the drift tube and through the exit gate. In particular, if the ion mobility apparatus comprises a total of $N + 1$ evenly-spaced gates as identified in FIG. 4 (e.g., Gate #0 through Gate #N), with length, $L$, being the longitudinal distance between the entrance and exit gates, wherein $v_0$ is the gate pulse frequency of the entrance gate, then a selected ion species having a drift velocity, $V_s$, where

$$V_s = L \frac{v_0}{N} \qquad \text{Eq. 1}$$

will be transmitted completely through and out of the drift tube if the frequency of opening and closing, $v_i$, of each gate $i^{th}$ other than the entrance gate is given by

$$v_i = (i + 1)v_0 \quad (1 \le i \le N) \qquad \text{Eqs. 2}$$

The various pulses that are illustrated in FIG. 5A are disposed in accordance with Eqs. 2. It should be further noted that, in addition to selectively transmitting the selected ion species having a drift velocity, $V_s$, the apparatus may also selectively transmit other ion species having drift velocities, $V_m$, given by either $V_m = mV_s$ or $V_m = (V_s/m)$, where $m$ is an integer, depending on the applied gate pulse widths and the ion species that are present in a sample.

It may be appreciated that, by introducing a stream of ions into the ion mobility separation apparatus 80 while maintaining the gate frequency $v_0$ constant and maintaining the gate frequencies of the other gates in accordance with Eq. 2, a stream of ions comprising a partially or wholly purified ion species (i.e., an ion species having drift velocity $V_s$) will be emitted from the exit end of the apparatus. The emitted ions may be collected and concentrated in an ion trapping apparatus downstream from the ion mobility separation apparatus in preparation for later processing or analysis. Alternatively, the ion stream may be directly delivered to a downstream processing or analysis apparatus at which ions within the stream are processed or analyzed as they arrive. It may be further appreciated that, by periodically changing the frequency $v_0$ as well as all of the frequencies $v_i$ while maintaining the relationships among the frequencies as specified by Eq. 2, a stream of ions comprising a partially or wholly purified different ion species having a different drift velocity will be emitted from the apparatus. Accordingly, ion species may be separately selected in accordance with their various drift velocities so that the so-selected ion species may be individually processed or analyzed downstream from the apparatus **80.**

FIG. 5A also shows plots **95a, 95b** of the longitudinal positions, $x$, within the drift tube, of two different batches of an ion species as functions of time, $t$. These two plotted bands relate to ion species having a particular drift velocity, $V_s$, as given by Eq. 1 above. These plots **95a, 95b**, as well as plotted lines **96** and **97,** are referenced to the leftmost vertical axis, which indicates position, $x$, between the entrance and exit gates within the drift tube, where the origin is at the position of the entrance gate and the maximum value, $L$, is at the position of the exit gate. With these definitions, the slopes of plotted bands **95a** and **95b** and plotted lines **96** and **97** are related to drift velocity. Plot **95a** shows the batch position versus time of a first batch of ions of the ion species that is admitted into the drift region at the first gate pulse **101** of Gate #0; plot **95b** is a similar plot that pertains to a second batch of ions of the ion species that is admitted into the drift region at the second gate pulse **105** of Gate #0. Plot **95a** is plotted as a band (instead of a simple line) because the ions of the ion species to which the plot pertains comprise a band that passes through each position in the drift tube over a time span, $\Delta t$, that is equal to the pulse width, $w_p$, of gate pulse **101.** Plot **95b** is also shown as a band for a similar reason. Plotted lines **96** and **97** represent the position-versus-time relationships ion species having drift velocities, within the drift tube, of $2V_s$ and $0.5\ V_s$, respectively. To account for the pulse width of the entrance gate, plotted line **96** passes through the leading (leftmost) edge of gate pulse **101,** whereas plotted line **97** passes through the trailing edge of that same gate pulse.

From inspection of FIG. 5A, it may be readily seen that the frequency of gate pulses of Gate #0 is $v_0$, the frequency of gate pulses of Gate #1 is $2v_0$, the frequency of gate pulses of Gate #2 is $3v_0$ and the frequency of gate pulses of Gate #3 is $4v_0$. For simplicity of plotting, the total number of gates in the example system corresponding to FIG. 5A is limited to four gates. However, an ion mobility separation apparatus in accordance with the present teachings may comprise more than four gates. Alternatively, an ion mobility separation apparatus in accordance with the present teachings may comprise fewer than four total gates. With the above-recited definitions and specifications, simple inspection of FIG. 5A makes it clear that, if an ion species having drift velocity, $V_s$, as given by Eq. 1, is admitted into an ion drift tube drift region as a batch of ions at the first gate pulse **101** of the entrance gate, then that same batch of ions passes encounters Gate #1 at the time of its third gate pulse **102,** encounters Gate #2 at the time of its seventh gate pulse **103** and encounters the exit gate, Gate #3, at the time of its thirteenth gate pulse **104.** The batch of ions having drift velocity, $V_s$, thus is able to pass completely through the drift region of the apparatus. Similarly, a second batch of the same ion species, if admitted into the drift region at the second gate pulse **105** of Gate #0, will encounter Gate #1 and Gate #2 at the times of their fifth gate pulse **106** and tenth gate pulse **107,** respectively. Extrapolating to Gate #4, this second batch of ions will pass through encounter and pass through the exit gate, Gate #3, at the time of its seventeenth gate pulse.

FIG. 5A illustrates that, using the apparatus described above with the illustrated pulse widths, most ion species having drift velocities other than $V_s$ will not be able to pass completely through the drift region and thus will be eliminated from the drift tube prior to encountering the exit gate. For example, if the slopes of lines **96** and **97** represent the limits of the range of drift velocity values that may be generally expected in a sample of ions, then, in order for an interferent ion pass completely through the drift region, from end to end, then its position-versus-time trajectory must be such that, at each of the positions of Gate #1, Gate #2 and Gate #3 (i.e., positions $L/3$, $2L/3$ and $L$ on the ordinate), it passes through the base **98** of a gate pulse. If, on the other hand, the trajectory intersects the horizontal baseline of any one of the plotted traces **91-94,** then the interferent ion will either be neutralized or expelled from the drift tube prior to reaching the position of the exit gate. As an example, the line **99** represents a hypothetical interferent ion species that is admitted into the drift tube at gate pulse **105** but fails to migrate beyond Gate #1 because that Gate #1 is in its closed configuration at the time (indicated by a star symbol) that the interferent ion species encounters that gate. However, if interferent ion species having drift velocities of either $2V_s$, $4V_s$, ..., and so forth or $(V_s/2)$, $(V_s/4)$, ..., and so forth, then the output of the ion mobility separation apparatus **80** will also include these interferent ion species.

The narrow pulse widths depicted in FIG. 5A allow for good ion-drift-velocity discrimination between a selected ion and an interferent ion species. Unfortunately, narrow pulse widths are associated with low duty cycle and therefore low numbers of ions transmitted. Since the widths of the gate pulses depicted in FIG. 5A are all identical, the gate duty cycle increases along the length of the drift tube. For example, the duty cycle values associated with the gate operational profiles **91, 92, 93** and **94** are approximately 5%, 10%, 15% and 20%, respectively. Wider pulse widths allow for superior duty cycles and increased transmission of selected ions (i.e., ions of an ion species having a particular drift velocity). However, pulse widths that are too wide allow increasing number of interferent ions to be transmitted together with the ions of interest since, under such circumstances later-introduced but faster-moving ions may be emitted from the exit gate simultaneously with earlier-introduced but slower-moving ions. The choice of appropriate pulse widths for any given sample may be made based on the types of ion species present in a particular sample batch of ions, the relative proportions of the ion species and the quantity of selected ions required for further processing or analysis downstream from the ion mobility separation apparatus **80.**

As described above, if gate pulse operational profiles having frequencies $v_0$, $v_1$, ..., $v_i$, ..., $v_N$ are applied to Gate #0 through Gate #N, respectively, then an ion mobility separation device as described herein can preferentially transmit a particular ion species, $\mathcal{S}$ (1), for which the ion mobility constant, $K$, is given by

$$K = \frac{Lv_0}{N \times E} \qquad \text{Eq. 3}$$

where E is the magnitude of the applied axial electric field, assumed to be constant across the length of the drift region.

Although this is a useful property, it is desirable to be able to preferentially transmit multiple ion species $\mathcal{S}$ (1), $\mathcal{S}$ (2), ..., $\mathcal{S}$ (k), ..., $\mathcal{S}$ (P) simultaneously, where the respective mobility constants are $K(1)$, $K(2)$, $K(3)$, etc. Such operation is able to more-efficiently transmit ion species from an ion mobility separation apparatus to downstream ion processing and analysis apparatus. To do so, it is necessary to apply multiple gate pulse waveforms (i.e., multiplexed or composite gate waveforms) to each one of the $N$ ion gates. For example, Gate #0 will receive a composite waveform comprised of multiplexed individual waveforms having frequencies $v_0(1)$, $v_0(2)$, $v_0(3)$ and so forth; Gate #1 will receive a different composite waveform comprised of multiplexed individual waveforms having frequencies $v_1(1)$, $v_1(2)$, $v_1(3)$, and so forth, with other gates receiving other respective composite waveforms, determined similarly. In all cases, Eqs. 2 hold with regard to the frequencies associated with any particular ion species.

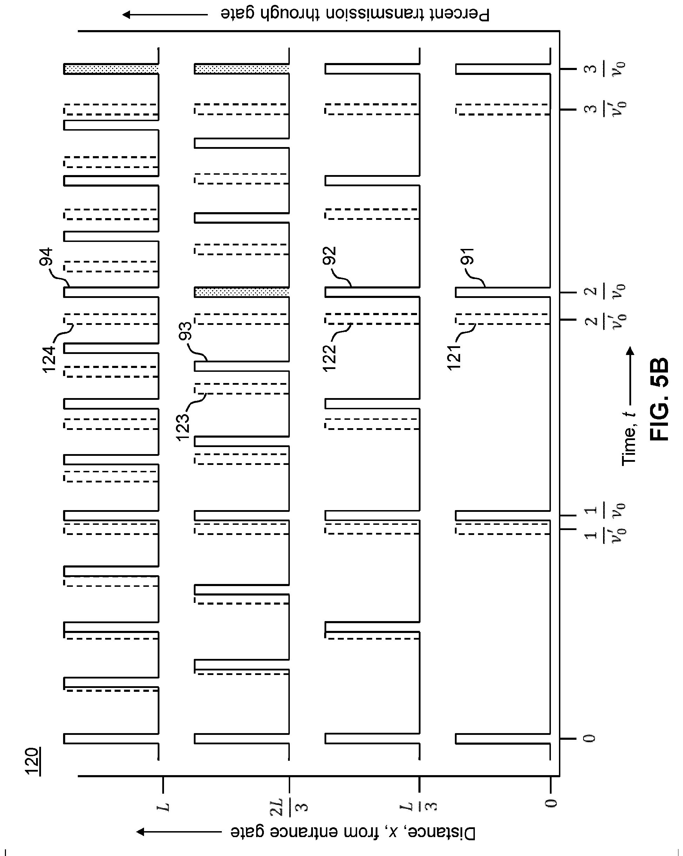

FIG. 5B schematically illustrates an example in which a multiplexed pair of gate pulse waveforms is applied to each gate. This figure illustrates a hypothetical set of plots **120** of the gate operational profiles of a four-gate ion mobility separation apparatus that is set up to preferentially transmit ion species $\mathcal{S}(1)$ and $\mathcal{S}(2)$ simultaneously. In addition to preferentially transmitting an ion species $\mathcal{S}(1)$ having a drift velocity, $V_s(1)$, the apparatus operated with the applied frequencies as shown in FIG. 5B will also simultaneously transmit a second ion species having a slightly greater drift velocity, $V_s(2)$. In FIG. 5B, the gate operational profiles **91, 92, 93** and **94,** illustrated in solid lines and corresponding to the ion species $\mathcal{S}(1)$, are reproduced from FIG. 5A. The gate operational profiles **121, 122, 123** and **124,** illustrated in dashed lines, correspond to preferential transmission of the ion species $\mathcal{S}(2)$. The full operational profile, for each gate, is the combination of the solid and dashed lines.

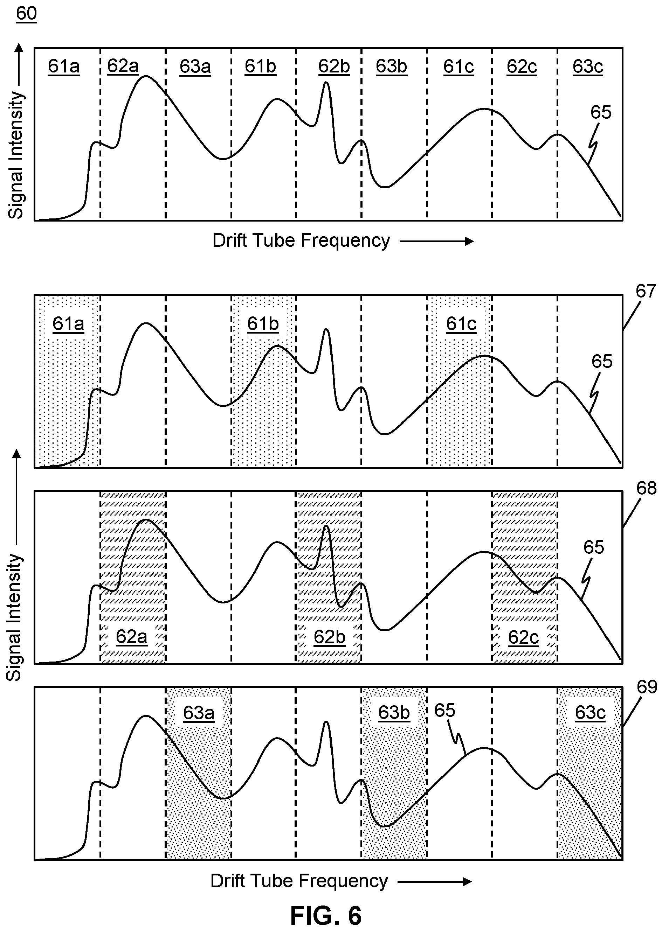

FIG. 6 is a schematic graphical depiction of choosing of gate pulse frequencies to be multiplexed for simultaneous preferential transmission of different ion species through a multi-gate ion mobility separation apparatus. Graph **60** is a hypothetical example of a detector signal, in total ion current, that might be observed from a multi-gate ion mobility spectrometer apparatus in accordance with the present teachings, as a batch of mixed ion species from a particular sample is inlet to the spectrometer. Such a graph might be observed if the outlet of the mobility spectrometer delivers ions directly to a detector. The graph **60** is plotted versus the gate pulse "base" frequency, $v_0$, which approximately corresponds to ion mobility. As the base frequency changes, various ion species having different mobilities, are either transmitted completely through the apparatus or are prevented from being so transmitted. The variation in the signal intensity of plot **60** may be understood as corresponding to the difference in the numbers of ions that are emitted from the mobility spectrometer as the various ion species, in different abundances, are either transmitted or not transmitted through the apparatus.

In some experimental situations, it may be desirable to co-isolate certain of the ion species of the sample for subsequent analysis, such as mass spectrometric analysis. The term "co-isolation", as used herein, refers to elimination of all ion species from an original mixture of species except for a limited number of specific ion species. When gate pulse frequencies of a multi-gate ion mobility separation apparatus are multiplexed, as described above with reference to FIG. 5B, then the ion mobility separation apparatus may be used to co-isolate a plurality of ion species in accordance with their different mobility constants.

The abscissa of graph **60** is partitioned into several frequency ranges **61a-61c, 62a-62c** and **63a-63c,** as shown. When applied gate pulse waveforms consist of specific chosen frequencies, then only certain of the ions of a sample will be simultaneously transmitted to a downstream apparatus, such as a mass spectrometer. Graphs **67, 68** and **69** different respective choices of gate pulse frequencies that are applied for the purpose of co-isolating certain ions. According to graph **67,** a first set of base frequencies is chosen by choosing a respective frequency from each of the partitions **61a, 61b** and **61c.** According to graph **68,** a second set of base frequencies is chosen by choosing a respective frequency from each of the partitions **62a, 62b** and **62c.** Finally, according to graph **69,** a third set of base frequencies is chosen by choosing a respective frequency from each of the partitions **63a, 63b** and **63c.**

According to various methods in accordance with the present teachings, waveforms comprising the first set of base frequencies as well as frequencies derived from the base frequencies (multiples of the base frequencies, as described above) are applied to the gates of a multi-gate ion mobility spectrometer apparatus. These waveforms are applied while a mixture of ions of a sample is provided to the inlet of the ion mobility separation apparatus and while a resulting first set of co-isolated ion species are emitted from that apparatus and are provided to downstream components. The downstream components may include the one or more ion processing apparatuses **58** and mass analyzer **59** that are illustrated in FIG. 2. As noted above, the ion processing components may include one or more of a mass filter, an ion trap for temporary storage of the ions received from the ion mobility separation apparatus and an ion fragmentation or reaction cell. The entire process is then repeated as before except that waveforms comprising the base frequencies from the second set of base frequencies and frequencies derived therefrom are applied to the gates of the ion mobility apparatus. A resulting second set of co-isolated ion species are thereby provided to the downstream components. The entire process is then repeated while applying waveforms comprising - and derived from - each remaining set of chosen base frequencies. At each repetition of the process, a respective set of co-isolated ion species is provided to the downstream components.

According to the various methods, the ion processing components **58** and mass analyzer **59** work in concert to generate at least one mass spectral analysis of the various sets of co-isolated ions that are emitted from the ion mobility separation apparatus. For example, an ion storage apparatus may receive co-isolated ions directly from the ion mobility separator apparatus and may accumulate these ions prior to transferring the accumulated ions either directly to the mass analyzer or to an ion fragmentation cell interposed between the ion storage apparatus and the mass analyzer. Alternatively, the fragmentation cell may receive co-isolated ions directly from the ion mobility separator apparatus and transfer the resulting fragment ions either to the mass analyzer for analysis or to an ion storage apparatus interposed between the fragmentation cell and the mass analyzer.

According to various methods, the one or more ion processing apparatuses **58** and mass analyzer **59** may process and analyze each set of co-isolated ion species as it is received from the ion mobility separation apparatus. The various mass analyses that result from such operation may optionally be combined into a single data set. For example, each individual mass analysis of a set of co-isolated ion species may comprise a partial mass spectrum over a restricted mass-to-charge ratio ($m/z$) that is only a subset of a full $m/z$ range of interest. A mass spectrum over the full $m/z$ range of interest may then be constructed, mathematically, from the various partial mass spectra. According to various alternative methods, an ion storage apparatus may co-accumulate therein the ion species of a plurality of sets of co-isolated species, thereby generating a superset of co-isolated ion species. The accumulated superset of co-isolated ion species may then be provided directly to the mass analyzer **59** or to an ion fragmentation cell interposed between the ion storage apparatus and the mass analyzer.

Apparatuses, methods and systems for improved ion mobility separation and isolation and subsequent processing or analysis have been herein disclosed. The discussion included in this application is intended to serve as a basic description. The present invention is not intended to be limited in scope by the specific embodiments described herein, which are intended as single illustrations of individual aspects of the invention. Instead, the invention is limited only by the claims. Various other modifications of the invention, in addition to those shown and described herein will become apparent to those skilled in the art from the foregoing description and accompanying drawings.

## Claims

1. An ion mobility separation apparatus comprising:

   a compartment having a gas therein;
   an electrode structure comprising a first plurality of electrodes within the compartment, the electrode structure defining a longitudinal axis;
   one or more power supplies electrically coupled to the first plurality of electrodes, wherein the first plurality of electrodes and the power supply are configured to maintain an electrical pseudopotential well encompassing and disposed parallel to the longitudinal axis and to maintain an electric field directed parallel to the longitudinal axis;
   an entrance ion gate disposed at an ion entrance end of the longitudinal axis;
   an exit ion gate disposed at an ion exit end of the longitudinal axis; and
   at least one additional ion gate disposed between the entrance and exit ion gates,
   wherein each of the entrance ion gate the exit ion gate and the at least one additional ion gate comprises a closed configuration during which ions are prevented from passing through the ion gate and an open configuration during which ions are able to pass through the ion gate.

2. An ion mobility separation apparatus as recited in claim 1, wherein the one or more power supplies are configured to supply a respective voltage waveform to each ion gate such that the ion gates are periodically in their respective open configurations according to a pattern such that ion species having a particular range of ion mobility or particular ranges of ion mobility are transferred through the entrance gate, exit gate and the at least one additional gate in preference to ion species not having the particular range or particular ranges of ion mobility.

3. An ion mobility separation apparatus as recited in claim 1 or claim 2, wherein the at least one additional ion gate comprises a plurality of $N - 1$ total ion gates, where $N > 2$, that are evenly spaced between the entrance and exit ion gates.

4. An ion mobility separation apparatus as recited in claim 3, wherein the voltage waveform supplied to the entrance ion gate is such that the entrance gate is periodically in its open configuration with a frequency of $v_0$ and wherein the voltage waveform supplied to each other ion gate that is $i$ gates removed from the entrance ion gate, where $1 \leq i \leq N$, is such that said each other ion gate is in its respective open configuration with a frequency, $v_i$, where $v_i = (i + 1)v_0$.

5. A system comprising:

an ion mobility separation apparatus in accordance with any one of the preceding claims; and
a mass analyzer configured to receive ions from the ion mobility separation apparatus.

6. A system as recited in claim 5, further comprising an ion storage apparatus disposed between the ion mobility separation apparatus and the mass spectrometer.

FIG. 1A
(Prior Art)

FIG. 1B
(Prior Art)

FIG. 4

**FIG. 2**

**FIG. 3A**
**(Prior Art)**

**FIG. 3B**
**(Prior Art)**

**FIG. 5A**

**FIG. 5B**

FIG. 6

Europäisches
Patentamt

European
Patent Office

Office européen
des brevets

# EUROPEAN SEARCH REPORT

Application Number

EP 21 16 1725

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2009/189070 A1 (CLEMMER DAVID E [US] ET AL) 30 July 2009 (2009-07-30) * figures 1-13 * * paragraph [0005] - paragraph [0085] * ----- | 1-5 | INV. G01N27/622 H01J49/00 |
| X | US 2015/041637 A1 (CLEMMER DAVID EDWARD [US] ET AL) 12 February 2015 (2015-02-12) * figures 1-28 * * paragraph [0005] - paragraph [0166] * ----- | 1-6 | |
| X | US 3 668 383 A (CARROLL DAVID I) 6 June 1972 (1972-06-06) * figure 1 * * column 1, line 50 - column 5, line 63 * ----- | 1-5 | |

TECHNICAL FIELDS
SEARCHED (IPC)

G01N
H01J

The present search report has been drawn up for all claims

| Place of search | Date of completion of the search | Examiner |
|---|---|---|
| Munich | 20 July 2021 | Colasanti, Katharina |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons

 .............................................................................................................
& : member of the same patent family, corresponding
     document

EPO FORM 1503 03.82 (P04C01)

## ANNEX TO THE EUROPEAN SEARCH REPORT
## ON EUROPEAN PATENT APPLICATION NO.

EP 21 16 1725

This annex lists the patent family members relating to the patent documents cited in the above-mentioned European search report.
The members are as contained in the European Patent Office EDP file on
The European Patent Office is in no way liable for these particulars which are merely given for the purpose of information.

20-07-2021

| Patent document cited in search report | | Publication date | Patent family member(s) | | Publication date |
|---|---|---|---|---|---|
| US 2009189070 | A1 | 30-07-2009 | US | 2009189070 A1 | 30-07-2009 |
| | | | WO | 2009091985 A1 | 23-07-2009 |
| US 2015041637 | A1 | 12-02-2015 | US | 2013292562 A1 | 07-11-2013 |
| | | | US | 2015041637 A1 | 12-02-2015 |
| | | | US | 2015338374 A1 | 26-11-2015 |
| | | | US | 2016216236 A1 | 28-07-2016 |
| US 3668383 | A | 06-06-1972 | NONE | | |

EPO FORM P0459

For more details about this annex : see Official Journal of the European Patent Office, No. 12/82